# EUROPEAN PATENT APPLICATION

(11) **EP 1 942 176 A2**
(43) Date of publication of application: **09.07.2008**
(21) Application number: 07104655.1
(22) Date of filing: 22.03.2007
(51) Int. Cl.: C10L 1/238, C10L 10/04

(54) **Detergent comprising the reaction product an amino alcohol, a high molecular weight hydroxy aromatic compound, and an aldehyd**

(30) Priority: 28.12.2006 US 617005
(71) Applicant: Afton Chemical Corporation, Richmond, VA 23219 (US)
(72) Inventor: Hou, Peter J., Chesterfield, VA 23832 (US); Colluci, William J., Glen Allen, VA 23060 (US); Malfer, Dennis J., Glen Allen, VA 23059 (US)
(74) Representative: Schwabe, Hans-Georg

(57) **Abstract**

There is disclosed a Mannich reaction product and a reaction to create a Mannich reaction product prepared from an amino alcohol, a high molecular weight hydroxy aromatic compound, and an aldehyde. Compositions comprising a hydrocarbon fuel and the reaction product are also disclosed.

## Description

### Field of the Disclosure

The present disclosure relates to a novel reaction to create a Mannich reaction product and the Mannich product prepared from the reaction of an amino alcohol, a high molecular weight hydroxy aromatic compound, and an aldehyde. Also provided are a fuel additive and a fuel composition using the Mannich base detergent, and benefits resulting from the use of the Mannich base detergent in the same.

### Background of the Disclosure

The use of Mannich compounds is known. Mannich reaction products have been taught for use as detergents in fuels. Non-volatile constituents of fuel, such as additives, form deposits on engine components. Conventional oil/fuel-soluble Mannich condensation products help to reduce deposits.

Known Mannich reaction products are made from the three-component reaction of an amine, an aldehyde and a hydroxy aromatic compound. It has been disclosed to create a Mannich condensation product from alkylphenols, aldehydes, and amines. Mannich condensation products can also be formed by combining a palyisobutyl-substituted hydroxyaromatic compound, an aldehyde, an amino acid or ester thereof, and an alkali metal base.

A lubricity additive, as taught by U.S. Patent No. 6,176,886, for use in low sulfur content, middle-distillate fuels, is known to be a fuel-soluble reaction product obtained by the reaction of a low molecular weight alkyl-substituted hydroxyaromatic compound, an aldehyde, and an amino-alcohol. U.S. Patent No. 6,176,886 is hereby incorporated herein by reference in its entirety. However, a low molecular weight Mannich product is thought to be a poor detergent. Therefore, the '886 reference itself suggests combining the reaction product taught in that reference (a lubricity additive) with a Mannich condensation product comprising the reaction product of a high molecular weight alkyl-substituted hydroxyaromatic compound an aldehyde and a polyamine (a detergent additive). It is believed that the low molecular weight carbon chains decompose on intake valves or other engine components. Deposits or material that were attached to the Mannich product are left behind as a deposit in fuel injectors or on intake valves. While numerous treatments for fuels are known, the prior art does not disclose reaction product of the present invention. There is a need or desire to create new processes to prepare Mannich products and/or to improve the performance of such a product as a detergent fuel additive or additized fuel formulation.

### SUMMARY OF THE DISCLOSURE

In accordance with the disclosure, there is disclosed a Mannich product formed by reacting or combining the compounds having the formulas (I), (II), and (III) where the formulas are defined as follows: 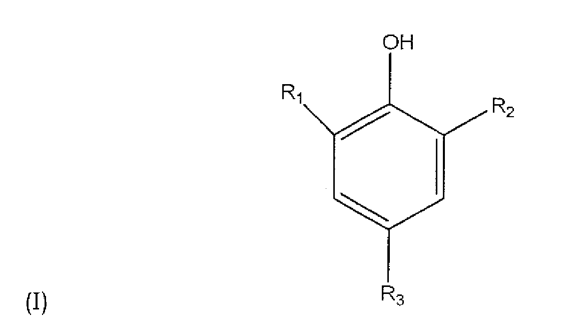 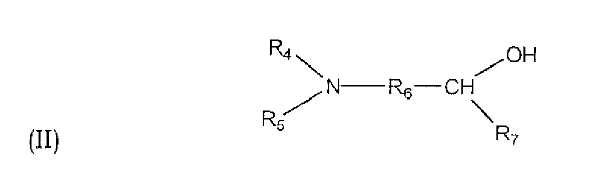 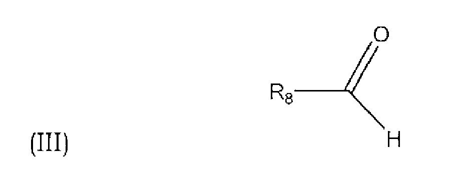 wherein R1 = H or C1-C4,
R2 = H or C1-C4, such that at least one of R1 or R2 is H,
R3= C35-C100
R4=H
R5 = C1-C6, or another amino group, or a hydroxyl group
R6 = C1-C6 or another amino group
R7 = H or another amino group or an alkyl C1-C6 hydroxyl group.
R8 = branched or straight chain, saturated or unsaturated C 1-C20

Further, there is also disclosed an additive package including the reaction product formed by reacting the compounds of formulas (I), (II), and (III). The additive package acts as a detergent in a fuel. Therefore, use of the additive package with a fuel reduces intake valve deposits, increases or better maintains injector cleanliness, and the like relative to a fuel without the additive.

Further, there is disclosed a fuel composition comprising a major amount of fuel and a minor amount of a Mannich additive or reaction product prepared by the reaction of compounds having formulas (I), (II), and (III). The Mannich additive may be present in the fuel in an amount within the range of from about 10 ppm - 1000 ppm w/w treat rate. In one example, a 30 ppm - 500 ppm w/w treat rate for the additive is preferred.

Further, there are disclosed unexpected performance benefits of using a fuel additized with the reaction product formed by reacting the compounds of formulas (I), (II), and (III). This Mannich additive unexpectedly decreases intake valve deposits and increases or better maintains fuel injector cleanliness and performance relative to a fuel that does not contain the reaction product. A relatively high molecular weight chain was found to increase the reaction product's detergency characteristics.

Additional objects and advantages of the disclosure will be set forth in part in the description which follows, and/or can be learned by practice of the disclosure. The objects and advantages of the disclosure will be realized and attained by means of the elements and combinations particularly pointed out in the appended claims.

It is to be understood that both the foregoing general description and the following detailed description are exemplary and explanatory only and are not restrictive of the disclosure, as claimed.

### DESCRIPTION OF THE EMBODIMENTS

The Mannich reaction product taught herein is operable with a fuel or fuel additive package to increase the performance of a combustion engine and/or associated components (intake valves, fuel injectors, and the like). The Mannich reaction product is obtained by the reaction of an amino alcohol, a high molecular weight hydroxyaromatic compound, and an aldehyde. As opposed to (or alternatively in addition to) the COOH groups typically found on the amine compound, the present invention contains an OH group on the amine.

The reaction product is intended for use as a detergent that operates to decrease intake valve deposits (IVDs) and to increase fuel injector cleanliness and performance. The high molecular weight hydroxyaromatic compound provides detergency characteristics to the reaction product. The long chain/high molecular weight of the hydroxyaromatic compound in the reaction product helps the reaction product resist decomposition on intake valves. Therefore, any material attached to the polar end of the reaction product is "washed off" the intake valve as the reaction product moves through the valve. The increased detergency characteristics also provide improved injector cleanliness.

More specifically, the Mannich product is formed by reacting or combining compounds of the formulas (I), (II), and (III) where the formulas are defined as follows: 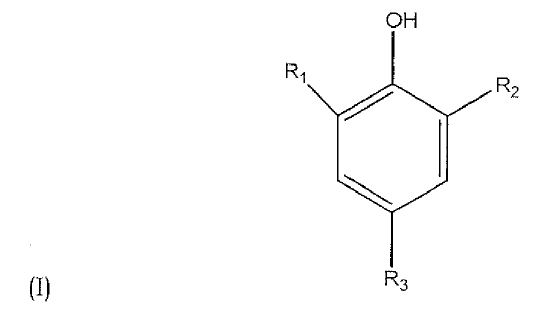 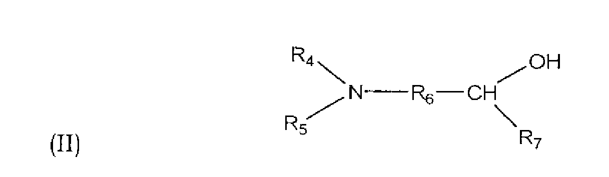 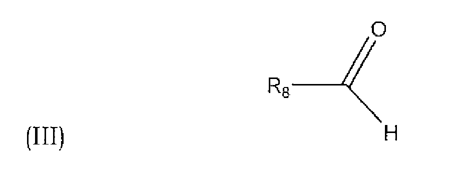 wherein R1 = H or C1-C4,
R2 = H or C1-C4, such that at least one of R1 or R2 is H,
R3= C35-C100
R4 = H
R5 = C1-C6, or another amino group, or a hydroxyl group
R6 = C 1-C6 or another amino group
R7 = H or another amino group or an alkyl C1-C6 hydroxyl group.
R8 = branched or straight chain, saturated or unsaturated C1-C20.

The hydroxy aromatic compound for use with the present invention has a molecular weight of at least about 500. This relatively high molecular weight provides detergency characteristics to the resulting reaction product, as discussed herein. In one example, the molecular weight is between about 550 and about 1500. For example, in yet another embodiment, the hydroxy aromatic compound might be a PIB-cresol with a molecular weight ranging from about 700 to about 1100. The detergency characteristics include, but are not limited to, the reduction of intake valve deposits and improved injector cleanliness relative to a fuel that does not contain the reaction product.

The reaction is conducted, in one preferred embodiment, by first adding an alkylate to a flask. An aromatic solvent, such as Aromatic 100, is added to the container holding the components. Other suitable solvents are available (e.g., toluene). Approximately 75% of the total calculated aromatic solvent is added to the components at this point. The components are stirred under a N₂ blanket. N₂ is set to approximately .1 to .2 SCFH.

When homogenous, the specified amine is added. Temperature will normally be in the 40 to 45 degrees Celsius range. The aldehyde is then added and the temperature rises to bout 45 to 50 degrees Celsius. The alkylate, the amine, and an aldehyde can be combined at different quantities that are pre-determined based upon requested mole rations. In one example, the ratio is 1:1:1 of alkylate:amine:aldehyde. The alkylate, in one example, is an ortho alkyl substituted hydroxyl aromatic.

Once combined, the temperature set point is increased to about 80 degrees Celsius where it is held for about 30 to 60 minutes. At that point, the temperature is set to 145 degrees Celsius in preparation of the start of distillation, which generally takes place about 30 minutes later. Distillation occurs at 95-105 degrees Celsius, and, for distillation, the N₂ is set to approximately .5 SCFH.

The temperature is maintained at 145 degrees Celsius for another 2 to 2.5 hours. After distillation, the total weight of the product in the container determines the amount of additional solvent needed to bring the final package composition to 25% solvent.

The alkylate can comprise other suitable high molecular weight components such as, and without limitation, a PIB-cresol, PIB-phenol, or the like. There are also numerous suitable amino-alcohols. The amino-alcohol may be, for example, 2-arnino-1,3-propanediol, 3-amino-1,2-propanediol, ethanolamine and diethanolamine.

The aldehyde is, in the example discussed above, formaldehyde. Other representative aldehydes for use in the preparation of the high molecular weight Mannich product include other aliphatic aldehydes such as acetaldehyde, propionaldehyde, butyraldehyde, valeraldehyde, caproaldehyde, heptaldehyde, and stearaldehyde. Aromatic aldehydes are suitable as well, including, for example, benzaldehyde and salicylaldehyde. Illustrative heterocyclic aldehydes for use herein are furfural and thiophene aldehyde, and the like. Formaldehyde-producing reagents such as paraformaldehyde or aqueous formaldehyde solutions such as formalin could be used.

When formulating the additized fuel or fuel composition, the Mannich additive, with or without other additives, is employed in an amount effective to decrease IVDs or to increase or better maintain fuel injector cleanliness relative to a fuel that does not contain the additive. Generally speaking, an additized fuel would include the Mannich additive in an amount within the range of from about 10 ppm - 1000 ppm w/w. In one example, a 30 ppm - 500 ppm w/w treat rate for the additive may be used.

The fuel composition with the reaction product of the present invention may contain or be joined with supplemental additives, such as lubricity additives, dispersants, cetane improves, other detergents, antioxidants, carrier fluids, and the like. The reaction product of the present invention should not adversely impact upon the activity of these other additives. Further, a fuel or additive package containing the reaction product should not detrimentally impact the combustion properties of a fuel.

As used herein, the term "amino alcohol" or "amino hydroxy compound", unless expressly stated otherwise, means a compound containing both (i) at least one primary or secondary amine and (ii) at least one hydroxyl group. It is therefore contemplated and included herein that one, two or more amine groups can be present on the structure (II) in addition to the one or more hydroxyl groups. The structure (II) can be an aminated glycol or aminated polyol.

Prepared samples have been analyzed and submitted to engine testing:
1. IVD Bench Test.
This test is to qualify additive effectiveness on reducing intake valve deposit. The additive is added to a base fuel (European reference fuel) at a specified dosage rate. The test is to simulate the IVD deposition (IVD Simulator, Model L-2. Chinese Patent No. ZL03261710.0). 300 ml of additized fuel is used for the test. The fuel and air flow are metered through a flow meter to an injector. The mixture of air and fuel is spraying against a heated metal plate at around 174 °C. The metal plate is weighted before and after the test. Each test lasts about 70 minutes.

**Table 1**

| **Test #** | **Plate #** | **Base fuel** | **Fuel code** | **Additive** | **Additive code** | **Dosage rate** **(PPMV)** | **Deposit** **(mg)** |
|---|---|---|---|---|---|---|---|
| 236 | 20 | Europe Ref | R06005192 | none | none | none | 15.0 |
| 252 | 16 | Europe Ref | R06005192 | Methylaminoethanol Mannich/A-100 | #281879-B | 300 | 1.1 |
| 253 | 11 | Europe Ref | R06005792 | Methylaminoethanol Mannich/A-100 | #281879-B | 200 | 2.3 |
| 255 | 29 | Europe Ref | R06005192 | Methylaminoethanol Mannich/AC-2400 | #281885-A | 300 | 0.2 |
| 261 | 18 | Europe Ref | R06005192 | Methylaminoethanol Mannich/AC-2400/A-100 | GAR115L01 | 200 | 3.7 |

As demonstrated in Table 1 above, a Mannich detergent or dispersant in accordance with the teachings herein showed substantial IVD reduction as compared with the unadditized fuel.
2. PFI Rig Test
This test is to determine the effectiveness of additives keeping fuel injector clean. It follows a modified standard test procedure ASTM D-6421. Instead of Chrysler injectors required by the method, New Honda injectors are used in this case.

**Table 2**

| **Test #** | **Fuel Code** | **Additive** | **Additive Code** | **Treat rate** | **1** | **2** | **3** | **4** | **Avg.** |
|---|---|---|---|---|---|---|---|---|---|
| 176 | R05005977 | Base fuel | none | none | 9.8 | 16.2 | 5.2 | 47.5 | 19.7 |
| 191 | R06005977 | 2-Methylaminoethanol Mannich in 50% A-100 | #281879-B | 80 ptb | 19.3 | 5.7 | 1.9 | 6.7 | 8.4 |
| 195 | R06005977 | Methylaminoethanol Mannich / AC-2400/A-100 /#230162-1 | GAR115L01 | 80 ptb | 15.4 | 4.4 | 22 | 8.4 | 12.6 |
| 201 | R06005977 | Methylaminoethanol Mannich / AC-2400/A-100 /#230162-1 | GAR115L01 | 200 ppmv | 10.9 | 9.9 | 16. 7 | 9.1 | 11.7 |

As is evident from the results shown in Table 2, a Mannich reaction products in accordance with the present invention are effective fuel injector cleaners.
3. Ford 2.3L Engine Test
This is a standard test (ASTM D-6201) to determine fuel additive on IVD deposit.

**Table 3**

| **Test #** | **Fuel Code** | **Additive** | **Code** | **Dosage** | **IVD,mg** |
|---|---|---|---|---|---|
| DA115-241 | 00002192L01 | none | none | none | 850.6 |
| DA115-260 | 00002192L01 | 2-methylazninoethanol Mannich/AC-2400 | 219931-2 | 93.7 ptb | 196.2 |
| DA115-261 | 00002192L01 | H-6410/AC-2400 | 211987 | 93.7 ptb | 145 |
| DA115-228 | 99000206L01 | none | none | none | 514.1 |
| DA115-238 | 99000206L01 | 2-methylaminoethanol Mannich/AC-2400 | 211956-2 | 93.7 ptb | 39.7 |
| DA115-240 | 99000206L01 | H-6420/AC-2400 | 211940 | 93.7 ptb | 56.6 |

As demonstrated in Table 3, a Mannich reaction product in accordance with the teaching herein showed substantial IVD reduction as compared with the unadditized fuel.
4. Intrepid Vehicle Test
Vehicle test on additive IVD reduction effectiveness. Mileage accumulation is generated by a four-cycle test performed at an average speed of 45.7 MPH with a cycle length of 76 miles) using a standard 1997 Dodge Intrepid, 3.3L, V-6.

**Table 4**

| **Test #** | **Vehicle ID** | **Fuel Code** | **Additive** | **Code** | **Dosage** | **IVD, mg** |
|---|---|---|---|---|---|---|
| 69 | 7D12 | R04004651 | none | none | none | 648.0 |
| 82 | 7D12 | R04006588 | 2-methylaminoethanol Mannich/AC-2400 | GAR115L01 | 28.8 ptb solids | 5.8 |
| 78 | 7D12 | R04006588 | HR-6410/AC-2400 | GAR115J01 | 28.8 ptb solids | 1.8 |

Table 4 demonstrates that a Mannich product as taught in one embodiment of the present invention provides excellent IVD performance.

In examining the tables, fuel codes R04004651 and R04006588 are identical fuels taken from different fuel batches. AC-2400 is a commercial product "ACTACLEAR"^{™} 2400 from Bayer. A-100 is aromatic 100 solvent. H-6410 is a commercial product from Afton Chemical.

The ratio ranges of (I), (II) and (III) might be, in one embodiment, 1:2.5:2.5. In another example, the compounds of (I), (II), and (III) are supplied in the ratios of 1:2:2. In yet another example, the ratio of the three components is 1:1:1. Therefore, examples of preferred ratios range from 1:1-2.5:1-2.5 for the components (I), (II), and (III).

This invention is susceptible to considerable variation in its practice. Therefore the foregoing description is not intended to limit, and should not be construed as limiting, the invention to the particular exemplifications presented hereinabove. Rather, what is intended to be covered is as set forth in the ensuing claims and the equivalents thereof permitted as a matter of law.

## Claims

1. A fuel detergent comprising the reaction product of reacting at least the components (a) a high molecular weight hydroxyaromatic compound, (b) an aldehyde and (c) an amino hydroxy compound.

2. The fuel detergent of claim 1, wherein the components are present in the ratio of 1:1:1, respectively.

3. The fuel detergent of claim 1, wherein the hydroxy aromatic compound is selected from the group consisting of phenols and cresols.

4. The fuel detergent of claim 1, wherein the aldehyde is selected from the group consisting of formaldehyde, acetaldehyde, propionaldehyde, butyraldehyde, valeraldehyde, caproaldehyde, heptaldehyde, and stearaldehyde, benzaldehyde, salicylaldehyde, furfural, thiophene aldehyde, and formaldehyde-producing reagents, where the formaldehyde-producing regent is selected from the group consisting of paraformaldehyde and formalin.

5. The fuel detergent of claim 1, wherein the amino hydroxy compound is selected from the group consisting of a compound containing both (i) at least one primary or secondary amine and (ii) at least one hydroxyl group.

6. The fuel detergent of claim 1, wherein the high molecular weight hydroxy aromatic compound has a molecular weight greater than 500.

7. The fuel detergent of claim 6, wherein the high molecular weight hydroxy aromatic compound is a PIB-cresol, the PIB-cresol having a molecular weight of about 700 to about 1100.

8. A fuel comprising the reaction product of claim 1.

9. The fuel of claim 8, wherein the use of the additized fuel reduces intake valve deposits relative to use of a fuel without the reaction product.

10. A fuel additive comprising the reaction product of claim 1.

11. A reaction process comprising
adding an alkylate to a flask;
providing an aromatic solvent to the flask;
stirring contents of flask under a N₂ blanket, the N₂ set to about .1 to .2 SCFH;
adding an amine;
adding an aldehyde;
wherein the alkylate, amine and aldehyde are provided in a ratio or about 1:1:1, respectively and wherein the alkylate is a high molecular weight ortho alkyl substituted hydroxyl aromatic.

12. The process of claim 11, further comprising the step of distilling the contents of the flask under a N₂ blanket, the N₂ blanket set to about .5 SCFH.

13. The process of claim 12, further comprising the step of providing additional solvent following the step of distillation, the step of adding the additional solvent bringing the resulting composition to about 25% solvent.

14. The process of claim 11, wherein the amine is an amino alcohol, the amino alcohol selected from the group comprising 2-amino-1,3-propanediol, 3-amino-1,2-propancdial, ethanolamine and diethanolamine.

15. The process of claim 11 herein the aldehyde is selected from the group consisting of formaldehyde, acetaldehyde, propionaldehyde, buyraldehyde, valeraldehyde, caproaldehyde, heptaldehyde, and stearaldehyde, benzaldehyde, salicylaldehyde, furfural, thiophene aldehyde, and formaldehyde-producing reagents, where the formaldehyde-producing regent is selected from the group consisting of paraformaldehyde and formalin
